# EUROPEAN PATENT APPLICATION

(11) **EP 4 424 150 A1**
(43) Date of publication of application: **04.09.2024**
(21) Application number: 24156782.5
(22) Date of filing: 09.02.2024
(51) Int. Cl.: A01K 1/015

(54) **PET LITTER**

(30) Priority: 28.02.2023 ES 202330669 U
(71) Applicant: Quiroga Rivero, Sergio Horacio, 36860 Ponteareas Pontevedra (ES)
(72) Inventor: Quiroga Rivero, Sergio Horacio, 36860 Ponteareas Pontevedra (ES)
(74) Representative: López Camba, Emilia

(57) **Abstract**

Litter made from sanitized, ground and sieved shell of shellfish and optionally, in case of having a high degree of humidity, the sanitized, ground and sieved shell is subjected to a drying process. Thanks to the use of shellfish shell, that has a high calcium content, the absorption of pet urine is achieved, neutralizing the smell and reducing the appearance of bacteria and pathogens. As it has a very low content of organic matter it would not cause problems of fermentation or the appearance of insects, something that happens with other biodegradable sands.

## Description

### OBJECT OF THE INVENTION

The object of the present invention, as established in the title, is a hygienic pet litter.

The present invention is characterized in that the raw material used for the manufacture of the hygienic litter is in particular sanitized and treated shellfish shells.

Therefore, the present invention belongs to the field, on the one hand, of hygienic litters for pets, and on the other hand, within the scope of uses of shellfish shells.

### BACKGROUND TO THE INVENTION

Pet litters composition depend on the type of animal in question, some are made of minerals, preferably sepiolite with a 4/30 particle size (0.60 mm to 5 mm). They require a large surface area due to their structural porosity. Other litters are composed of recycled paper pressed into pellet form and free of dust, which is important to avoid aggravating possible allergies in the animals. Its size is small and light, so the litter is compacted and simulates the natural bedding of the animal.

The types of commercial pet litters currently existing in the prior art are:
- Sepiolite litter
- Clumping litter
- Silica litter
- Biodegradable and/or organic litter

In the case of biodegradable and commercial litters, most of the time they have a high cost (3 or 4 times more than conventional ones) and also may cause problems due to early decomposition (odour, appearance of insects, fermentation, etc.).

The raw materials used in the manufacture of pet litter also have the following drawbacks: on the one hand, a reduced ability to neutralize odour, also allow the appearance of bacteria and pathogens, even biodegradable litters have problems of fermentation or appearance of insects.

Therefore, the purpose of the present invention is to overcome the drawbacks of the prior art pet litters, in particular, their high cost, the reduced odour neutralization capacity, the possible appearance of bacteria and pathogens and fermentation problems, developing a pet litter such as the one described below, the essence of which is contained in the first claim.

### DESCRIPTION OF THE INVENTION

The object of the present invention is essentially contained in the independent claim and the different embodiments are contained in the dependent claims.

The present invention relates to a hygienic litter for pets that is made from shellfish shells sanitized by any method, subjected to a grinding process and subsequent screening.

Shellfish are bilaterally symmetric triblastic coelomate protostome invertebrates (although some may have a secondary asymmetry), not segmented, with a soft body naked or protected by a shell. Shellfish are the most numerous invertebrates after arthropods, and include well-known forms such as clams, razor clams, oysters, cuttlefish, squid, octopuses, slugs and the great diversity of both marine and terrestrial snails.

Preferably, among the shellfish shells used, there is the mussel shell, which has to be sanitized, to subsequently be subjected to a grinding process. Then, it is sieved in different fractions, resulting in the pet litter. There is a last stage that is not essential, which is drying the shells and this step depends on whether the final product has a high level of moisture.

Initial sanitation is essential to ensure the absence of pathogens and reduce the content of organic matter.

As a result of using a shell of shellfish that contains natural calcium, it absorbs the urine of pets, neutralizing the smell and reducing the occurrence of bacteria and pathogens. As it has a very low content of organic matter it would not cause problems of fermentation or the appearance of insects, something that happens with other biodegradable pet litters.

Shellfish shell have never been used as pet litter. Additionally, with the proposed method, as it is completely natural it is much more sustainable than most of the pet litters that are produced abroad.

Unless indicated otherwise, all the technical and scientific elements used in this specification have the meaning usually understood by a person skilled in the art to which this invention belongs. In the practice of this invention, procedures and materials similar or equivalent to those described in the specification can be used.

In the description and claims, the word "comprises" and its variants do not intend to exclude other technical characteristics, additives, components or steps. For persons skilled in the art, other objects, advantages and characteristics of the invention will be partly inferred from the description and partly from the practice of the invention.

### PREFERRED PRODUCTION OF THE INVENTION

In a preferred production, the pet litter is made from sanitized and ground shellfish shell, subsequently sieved in different fractions or sizes.

In addition, and depending on the degree of humidity of the sanitised, ground and sieved shellfish, it undergoes a drying process corresponding to the degree of humidity.

The process of sanitizing shellfish shells can be performed in different ways: boiling, with heat, with steam, or with any other method that guarantees the absence of pathogens.

The grinding process can be carried out using a mill.

The sieving process can be performed using a machine to separate the crushed shellfish shell into different particle sizes.

Finally, the drying step, which as we have said is optional, can be carried out in a dryer, where the sanitized, ground and sieved shellfish is subjected to a dehydration process.

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. Hygienic pet litter **characterised in that** it is made from sanitised, ground and screened shellfish shell.

2. Hygienic pet litter according to claim 1, **characterised in that** the shell of the shellfish used is the shell of the mussel.
